# EUROPÄISCHE PATENTANMELDUNG

(11) **EP 0 943 588 A1**
(43) Veröffentlichungstag der Anmeldung: **22.09.1999**
(21) Anmeldenummer: 99101753.4
(22) Anmeldetag: 11.02.1999
(51) Int. Cl.: C04B 28/10

(54) **Verpressmörtel**

(30) Priorität: 17.03.1998 DE 19811607
(71) Anmelder: Ruf, Klaus, 91207 Lauf-Neunhof (DE)
(72) Erfinder: Ruf, Klaus, 91207 Lauf-Neunhof (DE)
(74) Vertreter: Grünecker, Kinkeldey, Stockmair & Schwanhäusser Anwaltssozietät

(57) **Zusammenfassung**

Die Erfindung bezieht sich auf einen Verpreßmörtel zum Injizieren, Verpressen und Verfüllen von Rissen und Hohlräumen, der sich besonders für Mauerwerk eignet, das unter Verwendung von hydraulischem Kalk oder Luftkalk erstellt wurde. Zu diesem Zweck enthält der Verpreßmörtel in der Trockenmischung etwa 8,0 bis etwa 23,0 Gew.-% Kalkhydrat nach DIN 1060 und/oder sulfatarmen (unter 1 %) hydraulischen Kalk, etwa 8,0 bis etwa 12,0 Gew.-% Füller, etwa 60,0 bis etwa 85,0 Gew.-% Sand, verteilt in Sieblinie Korn 0 - 4 mm, etwa 0,7 bis etwa 1,8 Gew.-% Gleitmittel, etwa 0,8 bis etwa 2,0 Gew.-% Puzzolane Korn 0 - 1 mm und etwa 0,1 bis etwa 0,5 Gew.-% Zusatzmittel gemäß DE 44 22 838 C1.

## Beschreibung

Die Erfindung bezieht sich auf einen Verpreßmörtel zum Injizieren, Verpressen und Verfüllen von Rissen und Hohlräumen in Bauteilen.

Im Bauteil auftretende Risse und Hohlräume, die dessen Stabilität gefährden, können saniert werden, indem man in die Risse oder Hohlräume eine fließfähige, erhärtende Masse einbringt. Zu diesem Zweck sind eine ganze Reihe von Produkten bekannt, die entweder auf Kunststoffbasis oder auf der Basis von Zement aufgebaut sind. Dazu gehören beispielsweise Epoxidharze, Polyurethan oder ungesättigte Polyester. Beispiele für mineralische Injektionsstoffe sind Zementleim, Zementsuspension, Zementtraß- und Zementsilikatstaubmischungen.

Diese vergleichsweise "modernen'' Massen führen jedoch bei mit Luftkalk- oder hydraulischem Kalkmörtel, wie er bei älterem Mauerwerk, insbesondere im Denkmalschutzbereich, verwendet wurde, zu Problemen. Sowohl die Kunststoff- als auch die Zementmassen sind Fremdkörper im Mauerwerk mit abweichenden Eigenschaften und mit gegebenenfalls auch mangelhafter Anbindung an die Riß- bzw. Hohlraumflanken.

Der Erfindung liegt somit die Aufgabe zugrunde, einen Verpreßmörtel bereitzustellen, der sich insbesondere für die Sanierung von mit Luftkalk- und hydraulischem Kalkmörtel erstellten Bauwerken eignet.

Die Aufgabe wird durch den in Anspruch 1 angegebenen Verpreßmörtel gelöst.

Erfindungsgemäß wird ein Verpreßmörtel auf der Basis von Kalkhydrat (Luftkalk) und/oder hydraulischem Kalk geschaffen, der sich hervorragend zur Sanierung historischer Bauwerke eignet. Der erfindungsgemäße Verpreßmörtel läßt sich jedoch mit allen herkömmlichen Maschinen und nach allen herkömmlichen Verfahren verarbeiten und einbringen, wie sie auch bisher zum Injizieren und Verpressen von Rissen und Hohlräumen im Mauerwerk eingesetzt wurden. Der erfindungsgemäße Verpreßmörtel verbindet sich mit den Riß- und Hohlraumflanken derartiger Bauwerke viel besser als dies selbst herkömmliche Verpreßmörtel auf Zementbasis können. Dadurch wird eine einwandfreie statische Verbindung zwischen den Mauerwerksteilen beidseitig des Risses oder des Hohlraums wieder hergestellt.

Vorteilhafte Bestandteile des erfindungsgemäßen Verpreßmörtels sind in den Ansprüchen 2 bis 8 beschrieben.

Die Ansprüche 9 bis 11 beschreiben Rezepturen für den erfindungsgemäßen Verpreßmörtel, die sich in der praktischen Erprobung bewährt haben.

Der erfindungsgemäße Verpreßmörtel zum Injizieren, Verpressen und Verfüllen weist in der Trockenmischung die folgenden Bestandteile auf:
etwa 2 bis etwa 23 Gew.-% Kalkhydrat nach DIN 1060, und/oder sulfatarmer (unter 1 %) hydraulischer Kalk,
etwa 8 bis etwa 12 Gew.-% Füller,
etwa 60 bis etwa 85 Gew.-% Sand, verteilt in Sieblinie Korn 0 - 4 mm,
etwa 0,7 bis etwa 1,8 Gew.-% Gleitmittel,
etwa 0,8 bis etwa 2 Gew.-% Puzzolane Korn 0 - 1 mm, und
etwa 0,1 bis etwa 0,5 Gew.-% Zusatzmittel gemäß DE-PS 44 22 838.

Der zusammen mit oder alternativ zum Kalkhydrat, bevorzugt als abgelöschter Trokkenkalk, als Kalkbindemittel eingesetzter hydraulische Kalk muß einen Sulfatgehalt von unter 1 % aufweisen. Es wird bevorzugt ein leicht hydraulischer Kalk in Form von Muschelkalk eingesetzt. Dieser kann jedoch auch ersetzt werden durch Wasserkalkhydrat, Wasserfeinkalk, Oberkreide, Romankalk, Extrakalk-Lias, Dolomitkalk, hochhydraulische Kalke und Schwarzkalke.

Der Füller ist bevorzugt ein ungebrannter gebrochener Kalkstein, gemahlen auf Korn 0,2 mm, im Niedrigbereich der Sieblinie. Es kann jedoch auch Marmormehl, Kaolinmehl sowie alle anderen Gesteinsmehle im Mineralbereich verwendet werden.

Der Sand sollte mit Korn 0 bis 4 mm mit in der Sieblinie verteilten, unterschiedlichen Korngrößen vorliegen. Auf jeden Fall sollte sich der Gesamtgehalt an Sand aus zwei, besser noch drei Siebfraktionen zusammensetzen. Durch die Veränderung des Sandgehaltes, in Verbindung mit der Veränderung der Zusätze an Bindemittel (hydraulischer Kalk und Luftkalk) kann die Härte des Verpreßmörtels genau eingestellt und auf die statischen Werte am Einsatzort abgestimmt werden. So können beispielsweise die Härtegrade zwischen etwa 3 N/mm bis etwa 8 N/mm eingestellt werden. Die Gewichtsanteile der übrigen Bestandteile verändern sich dabei nicht; nur die Korngrößen werden verändert.

Sand liegt bevorzugt als Quarzsand bzw. Quarzmehl vor. Es können jedoch auch Brechsande von Natursteinen und gewaschene Grubensande verwendet werden.

Als Gleitmittel wird bevorzugt ein Gemisch aus etwa 0,3 bis etwa 0,8 Gew.-% Talkum und etwa 0,4 bis etwa 1,0 Gew.-% gereinigtes Lehmpulver Korn 0 bis 1 mm verwendet. Das Talkum in dem Gleitmittelgemisch kann auch durch die gleiche Menge an Kieselgur ersetzt werden, wobei beide sowohl als Gleitmittel als auch zur Wasserabweisung dienen. Das bevorzugte Talkum ist auf dem Markt als Talkum-FP-I erhältlich. Kieselgur, die aus Abfällen von Brauereien recycelt wurde, hat sich als besonders geeignet für den vorliegenden Zweck erwiesen. Diese Kieselgur ist auf dem Markt unter dem Namen BÖRK-Kieselgur erhältlich.

Das Lehmmehl aus dem Gleitmittelgemisch wird bevorzugt aus Naturlehm gewonnen, getrocknet und gemahlen.

Puzzolane werden zur Anregung der hydraulischen Faktoren der Kalkbestandteile verwendet und liegen bevorzugt als Ziegelmehl Korn 0 - 1 mm vor. Statt Ziegelmehl kann jedoch auch Liabor-Lavaaschen-Perlite oder Bimsmehl verwendet werden.

Das Zusatzmittel wurde vom Erfinder des Verpreßmörtels selbst entwickelt und ist in der DE 44 22 838 C1 beschrieben, deren Offenbarungsgehalt hiermit durch Bezugnahme eingeschlossen wird. Das Zusatzmittel, das dort insbesondere für Kalkputzmörtel entwickelt wurde, enthält 15 bis 40 Gew.-% Stärkezucker, 5 bis 15 Gew.-% Naphtalin- oder Melamin-Formaldehyd-Kondensate, 10 bis 40 Gew.-% Kasein, 10 bis 30 Gew.% Dextrin, 3 bis 10 Gew.-% Fruchtsäuren, 5 bis 25 Gew.-% Borsäure oder Borax, 5 bis 20 Gew.-% Soda und/oder Natron und bis zu 1 Gew.-% Aluminiumacetat oder aluminiumacetathaltige Stoffe (essigsaure Tonerde) oder Aluminiumacetotartrat.

Drei besonders bevorzugte Rezepturen einer Trockenmischung für den zementfreien erfindungsgemäßen Verpreßmörtel werden wie folgt angegeben:
1.) 0 - 0,5 mm Kornbeimischung
   etwa 10 Gew.-% Füller, ungebranntes Kalksteinmehl,
   etwa 20 Gew.-% Quarzmehl Korn 0,04 mm,
   etwa 55 Gew.-% Quarzsand Korn 0 - 0,5 mm,
   etwa 2 Gew.-% Ziegelmehl Korn 0 - 0,5 mm,
   etwa 1 Gew.-% Lehmmehl Korn 0 - 0,5 mm,
   etwa 0,5 Gew.-% Talkum oder Kieselgur,
   etwa 6 Gew.-% hydraulischer Kalk unter 1 % Sulfatgehalt,
   etwa 6 Gew.-% Kalkhydrat,
   etwa 0,1 Gew.-% Zusatzmittel.
2.) 0 - 1 mm Kornbeimischung
   etwa 9 Gew.-% Kalkhydrat,
   etwa 5 Gew.-% hydraulischer Kalk unter 1 % Sulfatgehalt,
   etwa 10 Gew.-% Füller, ungebranntes Kalksteinmehl,
   etwa 5 Gew.-% Quarzsand Korn 0 - 0,09 mm,
   etwa 30 Gew.-% Quarzsand Korn 0,09 - 0.04 mm,
   etwa 38,5 Gew.-% Quarzsand Korn 0,4 - 1,0 mm,
   etwa 0,5 Gew.-% Talkum oder Kieselgur,
   etwa 0,5 Gew.-% Lehmmehl Korn 0 - 0,5 mm,
   etwa 1,5 Gew.-% Ziegelmehl Korn 0 - 1,0 mm,
   etwa 0,1 Gew.-% Zusatzmittel.
3.) Etwa 14 Gew.-% hydraulischer Kalk, sulfatarm unter 1%,
   etwa 10 Gew.-% Füller, ungebranntes Kalksteinmehl,
   etwa 5 Gew.-% Quarzsand Korn 0 - 0,09 mm,
   etwa 30 Gew.-% Quarzsand Korn 0,09 - 0,4 mm,
   etwa 38,5 Gew.-% Quarzsand Korn 0,4 - 1,0 mm,
   etwa 0,5 Gew.-% Talkum oder Kieselgur,
   etwa 0,5 Gew.-% Lehmpulver Korn 0 - 1,0 mm,
   etwa 1,5 Gew.-% Ziegelmehl Kom 0-1,0 mm,
   etwa 0,1 Gew.-% Zusatzmittel.

Die Trockenmischung aus den obenbeschriebenen Bestandteilen der einzelnen Rezepturen wird dann auf der Baustelle in einem Gewichtsverhältnis von etwa 1:1 mit Wasser angeteigt (z.B. 1001 g Trockenmischung auf 0,99 I Wasser bis 1006 g Trokkenmischung auf 0,99 I Wasser) und wie jede der bislang zum Injizieren, Verpressen oder Verfüllen von Rissen und Hohlräumen verwendeten Mörtelmasse eingesetzt. Der erfindungsgemäße Verpreßmörtel kann nach den gleichen Verfahren und mit den gleichen Maschinen verarbeitet werden, wie herkömmliche Verpreßmörtel auch.

Werden beispielsweise Risse oder Hohlräume in einem Mauerwerk festgestellt, so kann die Injektion und Verpressung durch Bohrlöcher im Durchmesser von 3 bis 6 cm erfolgen. Die Länge der Bohrlöcher bestimmt sich nach der Stärke des Mauerwerks. Die Bohrlöcher werden zunächst gesäubert, beispielsweise durch Ausblasen mit Luft oder Ausspülen mit Wasser. Das Einbringen des Injektionsmaterials erfolgt dann mit Membran-, Schnecken- und Kolbenpumpen.

## Patentansprüche

1. Verpreßmörtel **gekennzeichnet durch** die folgenden Bestandteile in der Trockenmischung:
etwa 2 bis etwa 23 Gew.-% Kalkhydrat und/oder sulfatarmer (unter 1% Sulfatgehalt) hydraulischer Kalk,
etwa 8 bis etwa 12 Gew.-% Füller,
etwa 60 bis etwa 85 Gew.-% Quarzmehl und/oderSand, verteilt in Sieblinie Korn 0-4 mm,
etwa 0,7 bis etwa 1,8 Gew.-% Gleitmittel,
etwa 0,8 bis etwa 2 Gew.-% Puzzolane Korn 0-1 mm,
etwa 0,1 bis etwa 0,5 Gew.-% Zusatzmittel.

2. Verpreßmörtel nach Anspruch 1, **gekennzeichnet durch** einen Gehalt an etwa 6 bis etwa 9 Gew.-% Kalkhydrat und etwa 2 bis etwa 14 Gew.-% hydraulischem Kalk.

3. Verpreßmörtel nach Anspruch 1 oder 2, **dadurch gekennzeichnet,** daß der hydraulische Kalk leicht hydraulischer Kalk in Form von Muschelkalk, Wasserkalkhydrat, Wasserfeinkalk, Oberkreide, Romankalk, Extrakalk-Lias, Dolimitkalk, hochhydraulischer Kalk oder Schwarzkalk ist.

4. Verpreßmörtel nach einem der Ansprüche 1 bis 3, **dadurch gekennzeichnet,** daß der Füller ungebranntes Kalksteinmehl, Marmormehl, Kaolinmehl, sowie andere Gesteinsmehle im Mineralbereich ist.

5. Verpreßmörtel nach einem der Ansprüche 1 bis 4, **dadurch gekennzeichnet,** daß der Sand Quarzsand, Quarzmehl, Brechsande von Natursteinen oder Grubensand ist.

6. Verpreßmörtel nach einem der Ansprüche 1 bis 5, **dadurch gekennzeichnet,** daß das Gleitmittel ein Gemisch aus etwa 0,3 bis etwa 0,8 Gew.-% Talkum oder Kieselgur und etwa 0,4 bis etwa 1 Gew.-% gereinigtes Lehmpulver Korn 0 - 1 mm ist.

7. Verpreßmörtel nach einem der Ansprüche 1 bis 5, **dadurch gekennzeichnet,** daß das Gleitmittel ein Gemisch aus etwa 0,3 bis etwa 0,8 Gew.-% Zinkstearat oder Natriumoliat oder Parafine und etwa 0,4 bis etwa 1 Gew.-% gereinigtes Lehmpulver Korn 0 - 1 mm ist.

8. Verpreßmörtel nach einem der Ansprüche 1 bis 7, **dadurch gekennzeichnet,** daß Puzzolane Ziegelmehl, Liabor-Lavaasche-Perlite oder Bimsmehl sind.

9. Verpreßmörtel nach einem der Ansprüche 1 bis 8, **gekennzeichnet durch** die folgende Zusammensetzung in der Trockenmasse:
etwa 10 Gew.-% ungebranntes Kalksteinmehl als Füller,
etwa 20 Gew.-% Quarzmehl Korn 0,04 mm,
etwa 55 Gew.-% Quarzsand Korn 0 - 0,5 mm,
etwa 2 Gew.-% Ziegelmehl Korn 0 - 0,5 mm,
etwa 1 Gew.-% Lehmmehl Korn 0 - 0,5 mm,
etwa 0,5 Gew.-% Talkum oder Kieselgur,
etwa 6 Gew.-% hydraulischer Kalk unter 1 % Sulfatgehalt,
etwa 6 Gew.-% Kalkhydrat,
etwa 0,1 Gew.-% Zusatzmittel.

10. Verpreßmörtel nach einem der Ansprüche 1 bis 8 **gekennzeichnet durch** die folgende Zusammensetzung in der Trockenmasse:
etwa 9 Gew.-% Kalkhydrat,
etwa 5 Gew.-% hydraulischer Kalk unter 1% Sulfatgehalt,
etwa 10 Gew.-% ungebranntes Kalksteinmehl als Füller,
etwa 5 Gew.-% Quarzsand Korn 0 - 0,09 mm,
etwa 30 Gew.-% Quarzsand Korn 0,09 - 0,4 mm,
etwa 38,5 Gew.-% Quarzsand Korn 0,4 - 1,0 mm,
etwa 0,5 Gew.-% Talkum oder Kieselgur,
etwa 0,5 Gew.-% Lehmmehl Korn 0 - 0,5 mm,
etwa 1,5 Gew.-% Ziegelmehl Korn 0 - 1,0 mm,
etwa 0,1 Gew.-% Zusatzmittel.

11. Verpreßmörtel nach einem der Ansprüche 1 bis 8, **gekennzeichnet durch** die folgende Zusammensetzung in der Trockenmasse:
etwa 14 Gew.-% hydraulischer Kalk, sulfatarm unter 1 %,
etwa 10 Gew.-% ungebranntes Kalksteinmehl als Füller,
etwa 5 Gew.-% Quarzsand Korn 0 - 0,09 mm,
etwa 30 Gew.-% Quarsand Korn 0,09 - 0,4 mm,
etwa 38,5 Gew.-% Quarzsand Korn 0,4 - 1,0 mm,
etwa 0,5 Gew.-% Talkum oder Kieselgur,
etwa 0,5 Gew.-% Lehmpulver Korn 0 - 1,0 mm,
etwa 1,5 Gew.-% Ziegelmehl Korn 0-1,0 mm,
etwa 0,1 Gew.-% Zusatzmittel.
